# EUROPEAN PATENT APPLICATION

(11) **EP 4 807 867 A1**
(43) Date of publication of application: **16.09.2026**
(21) Application number: 26160796.4
(22) Date of filing: 25.02.2026
(51) Int. Cl.: H01M 50/209, H01M 50/242, H01M 50/271, H01M 50/503, H01M 50/507, H01M 50/591

(54) **BATTERY ASSEMBLY AND METHOD FOR MANUFACTURING THE SAME**

(30) Priority: 10.03.2025 KR 20250030339
(71) Applicant: SAMSUNG SDI CO., LTD., Yongin-si, Gyeonggi-do 17084 (KR)
(72) Inventor: PARK, Gunyeob, 17084 YONGIN-SI (KR)
(74) Representative: Regimbeau

(57) **Abstract**

The present disclosure provides a battery assembly. The battery assembly may include a stack comprising a plurality of battery cells stacked in a first direction, a bus bar holder on the stack, and a support member on the bus bar holder. The support member may include a first support member that supports a first side surface of the stack and a second support member that supports a second side surface of the stack, and at least a portion of the first support member may overlap at least a portion of the second support member in a second direction that is different from the first direction.

## Description

### FIELD

The present disclosure relates to a battery assembly and a method for manufacturing the same.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Meanwhile, during charging/discharging of a secondary battery, a swelling phenomenon may occur in which the secondary battery expands due to various causes, such as gas generation inside an electrode assembly, overcharging, or a high-temperature environment. The swelling phenomenon may lead to irregularities in the secondary battery, such as a decrease in performance, reduced adhesion between the electrode plate and a separator that can cause an internal short circuit, and the like. Accordingly, it is desirable to suppress the swelling phenomenon so as to prevent the occurrence of such irregularities.

The above information disclosed in this Background section is for enhancement of understanding of the background of the present disclosure, and therefore, it may contain information that does not constitute related (or prior) art.

### SUMMARY

The present disclosure provides a battery assembly and a method for manufacturing the same according to the appended claims to solve the problems described herein.

However, the technical problem to be solved by the present disclosure is not limited to the problems described herein, and other problems not mentioned herein, and aspects and features of the present disclosure that would address such problems, will be clearly understood by those skilled in the art from the description of the present disclosure herein.

According to embodiments of the present disclosure to solve the problems described herein, a battery assembly includes: a stack including a plurality of battery cells stacked in a first direction; a bus bar holder on the stack; and a support member on the bus bar holder, wherein the support member comprises a first support member that supports a first side surface of the stack and a second support member that supports a second side surface of the stack, and at least a portion of the first support member may overlap at least a portion of the second support member in a second direction that is different from the first direction.

According to embodiments, the first support member may include a first extension portion that extends in the first direction and is on the bus bar holder, and a first bent portion that is bent from the first extension portion in the second direction and supports the first side surface of the stack.

According to embodiments, the second support member may include a second extension portion that extends in the first direction and is on the bus bar holder, and a second bent portion that is bent from the second extension portion in the second direction and supports the second side surface of the stack.

According to embodiments, at least a portion of the first extension portion of the first support member may overlap and be coupled with at least a portion of the second extension portion of the second support member.

According to embodiments, an overlap length between the first extension portion and the second extension portion may be determined based on a length of the stack in the first direction.

According to embodiments, the bus bar holder may include a protrusion portion protruding in the second direction, and either the first extension portion or the second extension portion may be disposed on the protrusion portion.

According to embodiments, a thickness of the protrusion portion may correspond to either a thickness of the first extension portion or a thickness of the second extension portion.

According to embodiments, the bus bar holder may include a plurality of fastening portions protruding in the second direction, the plurality of fastening portions including a first fastening portion, a second fastening portion spaced from the first fastening portion in the first direction, and a third fastening portion spaced from the first fastening portion in a third direction that is different from the first and second directions, and the support member may be between the first fastening portion and the third fastening portion.

According to embodiments, the first extension portion of the first support member may include a first fixing portion protruding in the third direction, and a length of the first fixing portion in the first direction may be shorter than a distance between the first fastening portion and the second fastening portion.

According to embodiments, the second extension portion of the second support member may include a second fixing portion protruding in the third direction, and a length of the second fixing portion in the first direction may be shorter than a distance between the first fastening portion and the second fastening portion.

According to embodiments, the first extension portion and the second extension portion may be coupled to the plurality of fastening portions by sliding movement along the first direction on the bus bar holder.

According to embodiments, the battery assembly may further include a first end plate on the first side surface of the stack, and the first end plate may include a first stepped portion that accommodates the first bent portion.

According to embodiments, the battery assembly may further include a second end plate on the second side surface of the stack, and the second end plate may include a second stepped portion that accommodates the second bent portion.

According to embodiments of the present disclosure to solve the problems described herein, a method for manufacturing a battery assembly includes: stacking a plurality of battery cells in a first direction to form a stack; disposing a bus bar holder on the stack; disposing a support member on the bus bar holder; and pressing, in the first direction, the stack on which the bus bar holder is disposed, wherein the support member comprises a first support member that supports a first side surface of the stack and a second support member that supports a second side surface of the stack, and at least a portion of the first support member may overlap at least a portion of the second support member in a second direction that is different from the first direction.

According to embodiments, the pressing may include pressing, in the first direction, the first side surface of the stack and the first bent portion of the first support member by using a first end plate, and the first end plate may include a first stepped portion that accommodates the first bent portion.

According to embodiments, the pressing may include pressing, in the first direction, the second side surface of the stack and the second bent portion of the second support member by using a second end plate, and the second end plate may include a second stepped portion that accommodates the second bent portion.

According to embodiments, the method may further include a step in which at least a portion of the first extension portion of the first support member overlaps and is coupled with at least a portion of the second extension portion of the second support member.

According to some embodiments of the present disclosure, it may be possible, in response to thickness changes in a battery cell caused by swelling, to move the support member via a sliding method and thus prevent breakage of the support member.

According to some embodiments of the present disclosure, during a battery module manufacturing process, it may be possible to arrange the support member so as to correspond to the stacked length of the stacked battery cells.

However, aspects and features of the present disclosure are not limited to those described herein, and other aspects and features not mentioned will be clearly understood by a person skilled in the art from the detailed description, described herein.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating an example of a battery cell according to embodiments of the present disclosure.
FIG. 2 is a perspective view illustrating an example of a battery assembly according to embodiments of the present disclosure.
FIG. 3 is a perspective view illustrating an example of a support member according to embodiments of the present disclosure.
FIG. 4 is a perspective view illustrating an example of a bus bar holder according to embodiments of the present disclosure.
FIG. 5 is a perspective view illustrating an example in which a support member is on a bus bar holder according to embodiments of the present disclosure.
FIG. 6 is a perspective view illustrating an example in which a bus bar holder having a support member is on a stack according to embodiments of the present disclosure.
FIG. 7 is a cross-sectional view taken along line B-B' of embodiments shown in FIG. 6.
FIG. 8 is a perspective view illustrating an example of a battery assembly further including an end plate according to embodiments of the present disclosure.
FIG. 9 is a cross-sectional view taken along line C-C' of embodiments shown in FIG. 8.
FIG. 10 is a flowchart illustrating a method of manufacturing a battery assembly according to embodiments of the present disclosure.
FIGS. 11a to 11c are diagrams illustrating a process in which a battery assembly is manufactured according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some of the embodiments of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is recognized as low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked," or "connected" to each other, or another component may be "interposed" between the components."

Throughout the specification, when "A and/or B" is stated, it means A, B, or A and B, unless otherwise stated. That is, "and/or" includes any or all combinations of a plurality of items enumerated. When "C to D" is stated, it means C or greater and D or less, unless otherwise specified.

In this specification, a first direction may refer to the X-axis direction. A second direction may be perpendicular to the first direction. The second direction may refer to the Z-axis direction. A third direction may be perpendicular to each of the first direction and the second direction. The third direction may refer to the Y-axis direction. The first direction may be parallel to a stacking direction of the battery cells, and the second direction and the third direction may be perpendicular to the stacking direction of the battery cells.

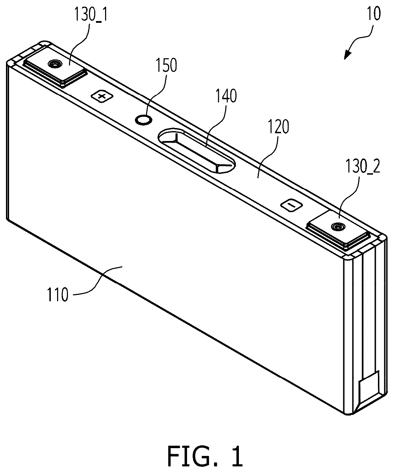

FIG. 1 is a perspective view illustrating an example of a battery cell according to embodiments of the present disclosure. Referring to FIG. 1, a battery cell 10 may include at least one electrode assembly, which is wound or stacked such that a separator made of an insulator is interposed between a positive electrode and a negative electrode, a case 110 in which the electrode assembly is accommodated, and a cap plate 120 coupled to one open end of case 110. The battery cell 10 shown in FIG. 1 may be a type of secondary battery.

The positive electrode and the negative electrode may include a coated region in which an active material is applied to a thin metal foil current collector, and an uncoated region in which the active material is not applied.

The positive electrode and the negative electrode are wound with a separator, which is an insulator, interposed therebetween. However, the present disclosure is not limited thereto, and the electrode assembly may also have a structure in which a plurality of sheets of a positive electrode and a negative electrode are alternately stacked with a separator interposed therebetween.

Case 110 forms the overall exterior of battery cell 10 and may be formed of a conductive metal, such as aluminum, an aluminum alloy, or steel plated with nickel. In addition, case 110 may provide a space in which the electrode assembly is accommodated. In FIG. 1, case 110 is a prismatic case, and battery cell 10 is shown as a prismatic battery cell, but the scope of the present disclosure is not limited thereto. Battery cell 10 may be any shape of battery cell, such as a prismatic, cylindrical, or pouch-type battery cell.

Cap plate 120 is coupled to one open end of case 110 to seal case 110. Case 110 and cap plate 120 may be formed of a conductive material. According to embodiments, an upper end of case 110 may be open, and cap plate 120 may seal the open upper end of case 110.

A positive electrode terminal 130_1 electrically connected to the positive electrode and a negative electrode terminal 130_2 electrically connected to the negative electrode may be coupled to cap plate 120. For example, positive electrode terminal 130_1 and negative electrode terminal 130_2 may be installed so as to protrude outward by passing through cap plate 120.

In embodiments, a vent portion 140 may be formed on at least one surface (for example, in the illustrated example, an upper surface of battery cell 10, i.e., cap plate 120) of battery cell 10. Vent portion 140 may be configured to open when an internal pressure of battery cell 10 greater than or equal to a predetermined critical pressure is detected.

In embodiments, cap plate 120 may include an electrolyte inlet 150. For example, electrolyte inlet 150 may be a through-hole formed in cap plate 120, and after cap plate 120 is coupled to and seals the opening of case 110, electrolyte inlet 150 may be formed to allow an electrolyte to be injected into case 110. After the electrolyte is injected, electrolyte inlet 150 may be sealed with a sealing member.

Battery cell 10 may be a lithium battery cell, a sodium battery cell, and the like. However, the scope of the present disclosure is not limited thereto, and battery cell 10 encompasses any battery capable of repeatedly supplying electricity through charging and discharging. In embodiments, if battery cell 10 is a lithium battery cell, it may be used in an electric vehicle (EV), such as a plug-in hybrid electric vehicle (PHEV), due to its excellent lifespan and high-rate characteristics. In addition, a lithium battery cell may be used in fields requiring storage of large amounts of power, such as electric bicycles or power tools.

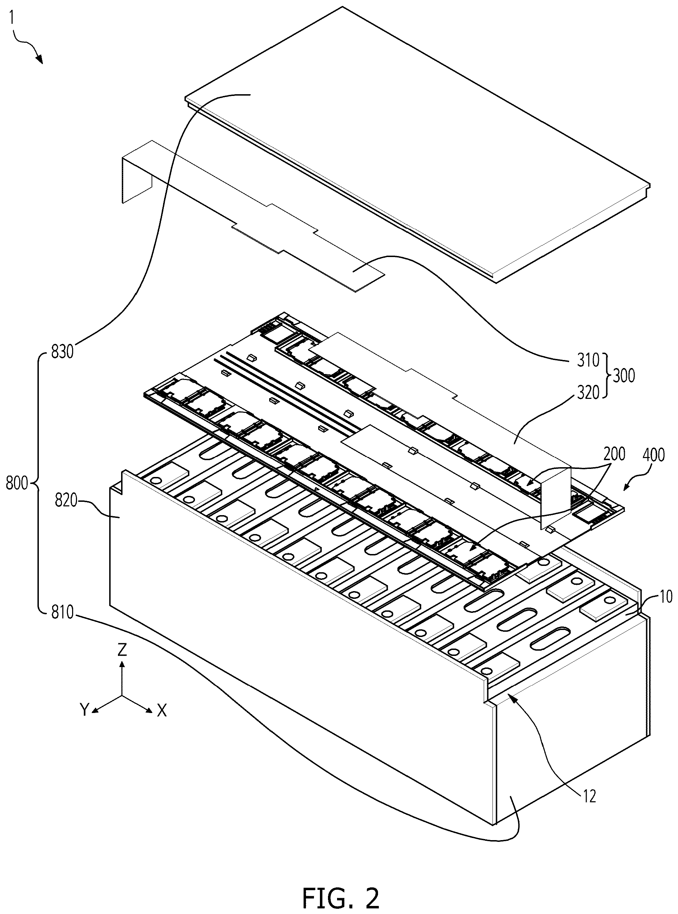

FIG. 2 is a perspective view illustrating an example of a battery assembly according to embodiments of the present disclosure.

In embodiments, a battery assembly 1 may include a stack 12 that includes a plurality of battery cells 10 stacked, a frame 800 that accommodates the plurality of battery cells 10, a plurality of bus bars 200 that are electrically connected to the plurality of battery cells 10, a bus bar holder 400 that supports the plurality of bus bars 200, and a support member 300 on bus bar holder 400. According to embodiments, battery assembly 1 may also be referred to as a battery module or a battery pack.

A battery pack may include at least one battery module and a pack housing having a receiving space to accommodate at least one battery module. A battery module may include a plurality of battery cells and a module housing. The battery cells may be accommodated in the module housing in a stacked form. Depending on the type of battery, the battery cells may be cylindrical, prismatic, or pouch-type battery cells.

In a battery pack, a single stacked cell stack may constitute one module. The cell stack may be accommodated in a receiving space of the pack housing or in a receiving space partitioned by a frame, a partition wall, or the like.

Battery cells generate a large amount of heat during charging and discharging. The generated heat accumulates in the battery cells and accelerates the deterioration of the battery cells. To suppress such deterioration, the battery pack may further include a cooling member. The cooling member may be provided herein the receiving space where the battery cells are installed, or, without being limited thereto, it may also be provided in an upper or side portion of the battery pack depending on the battery pack configuration.

In each battery cell, under abnormal operating conditions also referred to as thermal runaway or a thermal event, exhaust gas generated inside the battery cell may be discharged to the outside of the battery cell. To mitigate damage to the battery pack or module, the battery pack or battery module may include an exhaust port or the like for discharging exhaust gas.

The battery pack may include a battery and a battery management system (BMS) to manage the battery. The battery management system may include a detection device, a balancing device, and a control device. The battery module may include a plurality of cells connected in series or parallel with one another. The battery module itself may also be connected in series or parallel with other battery modules. Battery assembly 1 may include a plurality of battery cells 10. For example, battery assembly 1 may include stack 12 having a plurality of battery cells 10 stacked in a first direction (X). The plurality of battery cells 10 may be stacked in the first direction (X) such that their broad faces oppose each other.

As described herein, each battery cell 10 may include a case, an electrode assembly accommodated in the case together with an electrolyte, and a cap plate that seals the case. The electrode assembly may be formed by winding or stacking a negative electrode, a separator, and a positive electrode in sequence. The negative electrode, formed of a metal foil such as copper, a copper alloy, nickel, or a nickel alloy, may have a negative electrode active material such as graphite or carbon applied or coated thereon. The positive electrode, formed of a metal foil such as aluminum or an aluminum alloy, may have an active material such as a transition metal oxide applied or coated thereon. A non-coated region containing no active material coating layer may be formed on each of the negative electrode and the positive electrode, and a negative electrode tab and a positive electrode tab may be connected to these non-coated regions, respectively. The connected negative electrode tab and positive electrode tab may be electrically connected to a negative electrode terminal and a positive electrode terminal, respectively, formed on the cap plate. The negative electrode terminal and the positive electrode terminal formed on the cap plate may be electrically connected to bus bar 200. However, the structure of battery cell 10 is not limited to the above and may be suitably modified as needed.

Stack 12, which includes a plurality of battery cells 10 stacked, may be accommodated in frame 800. According to embodiments, frame 800 may include a pair of end plates 810 that contact the battery cells 10 at the outermost portion in the arrangement direction of battery cells 10, a pair of side plates 820 that are coupled perpendicularly to end plates 810, and a top plate 830 that is disposed above support member 300. Although not illustrated, a bottom plate may be provided below battery cells 10 to support stack 12 from below. Inside frame 800, stack 12, bus bar holder 400, bus bars 200, and support member 300 may be housed.

Bus bar holder 400 may be disposed on stack 12. As a specific example, bus bar holder 400 may be disposed on an upper portion of the cap plates of each battery cell 10 and may support bus bars 200. For example, bus bar holder 400 may be formed as a substantially rectangular plate and may be made of an insulating material.

A plurality of through-holes may be formed in bus bar holder 400 so that positive electrode terminals and negative electrode terminals of the cap plates are exposed. The positive electrode terminals and the negative electrode terminals may be exposed through these through-holes formed in bus bar holder 400, and bus bars 200 may be electrically connected to the exposed positive electrode terminals and negative electrode terminals.

Bus bars 200 may electrically connect the positive electrode terminals and the negative electrode terminals. Bus bars 200 may connect a plurality of battery cells 10 in series and/or in parallel. Accordingly, a plurality of bus bars 200 may be provided. According to embodiments, bus bar 200 may electrically connect a positive electrode terminal of one battery cell 10 to either a positive electrode terminal or a negative electrode terminal of another battery cell 10. Bus bar 200 may also electrically connect a negative electrode terminal of one battery cell 10 to either a positive electrode terminal or a negative electrode terminal of another battery cell 10. Bus bar 200 may be connected to a positive electrode terminal and/or a negative electrode terminal by, for example, welding. Regions of battery cells 10 other than the positive electrode terminal and the negative electrode terminal may be insulated from bus bar 200 by bus bar holder 400.

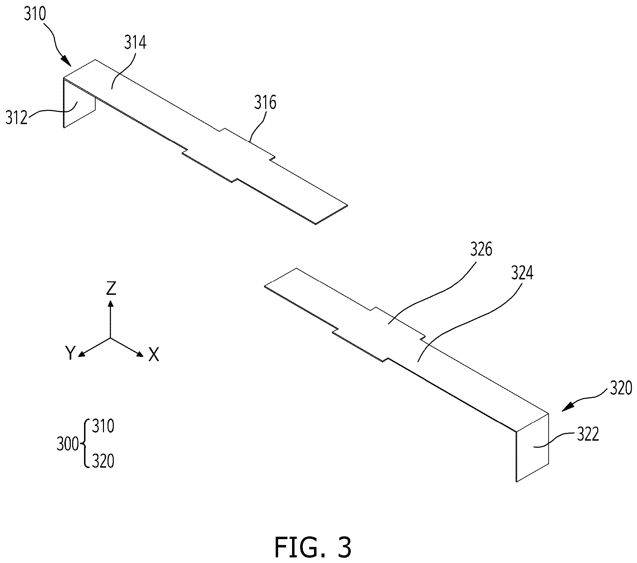

In embodiments, support member 300 may be disposed on bus bar holder 400. Support member 300 may include a first support member 310 that supports a first side surface of stack 12 and a second support member 320 that supports a second side surface of stack 12. First side surface and second side surface of stack 12 may correspond to the exposed faces of the outermost battery cells 10 in the stacking direction of battery cells 10. In embodiments, at least a portion of first support member 310 may overlap at least a portion of second support member 320 in the second direction (Z). A more detailed description of support member 300 will be given herein with reference to FIG. 3.

FIG. 3 is a perspective view illustrating an example of a support member according to embodiments of the present disclosure.

In embodiments, a battery assembly may include a stack, which has a plurality of battery cells stacked in a first direction, a bus bar holder on the stack, and a support member 300 on the bus bar holder. Here, support member 300 may include first support member 310 that supports a first side surface of the stack and second support member 320 that supports a second side surface of the stack.

Referring to FIG. 3, first support member 310 may include a first extension portion 314 that extends along the first direction (X) and is on the bus bar holder, and a first bent portion 312 that is bent from first extension portion 314 along the second direction (Z) and supports a first side surface of the stack. First extension portion 314 may include a first fixing portion 316 protruding in the third direction (Y). First fixing portion 316 may protrude from both sides of first extension portion 314.

Second support member 320 may include a second extension portion 324 that extends along the first direction (X) and is on the bus bar holder, and a second bent portion 322 that is bent from second extension portion 324 along the second direction (Z) and supports a second side surface of the stack. Second extension portion 324 may include a second fixing portion 326 protruding in the third direction (Y). Second fixing portion 326 may protrude from both sides of second extension portion 324.

In embodiments, at least a portion of first support member 310 may overlap at least a portion of second support member 320 in the second direction (Z). For example, at least a portion of first extension portion 314 of first support member 310 may overlap and be coupled with at least a portion of second extension portion 324 of second support member 320 in the second direction (Z). An overlap length between first support member 310 and second support member 320 may be determined based on the length of the stack in the first direction (X).

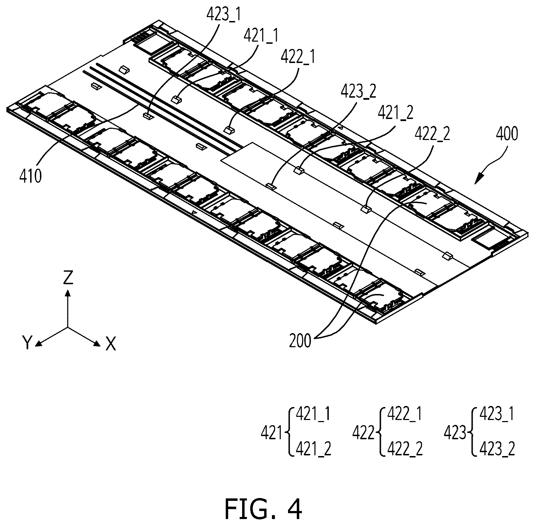

FIG. 4 is a perspective view illustrating an example of a bus bar holder according to embodiments of the present disclosure.

In embodiments, a battery assembly may include a stack, which has a plurality of battery cells stacked in the first direction (X), a bus bar holder 400 on the stack, and a support member on bus bar holder 400.

Referring to FIGS. 3 and 4, bus bar holder 400 according to embodiments of the present disclosure may include a protrusion portion 410 protruding in the second direction (Z). In embodiments, one of first extension portion 314 of first support member 310 or second extension portion 324 of second support member 320 may be disposed on protrusion portion 410. A thickness of protrusion portion 410 may correspond to either the thickness of first extension portion 314 or the thickness of second extension portion 324. The extension portion on protrusion portion 410 may be positioned relatively higher in the second direction (Z) by the protruding thickness of protrusion portion 410 compared to the extension portion not on protrusion portion 410. Accordingly, at least a portion of first extension portion 314 may overlap at least a portion of second extension portion 324 in the second direction (Z).

In embodiments, bus bar holder 400 may include a plurality of fastening portions 420 protruding in the second direction (Z). The plurality of fastening portions 420 may include a first fastening portion 421, a second fastening portion 422 spaced from first fastening portion 421 in the first direction (X), and a third fastening portion 423 spaced from first fastening portion 421 in the third direction (Y), which differs from both the first and second directions. The support member may be between first fastening portion 421 and third fastening portion 423.

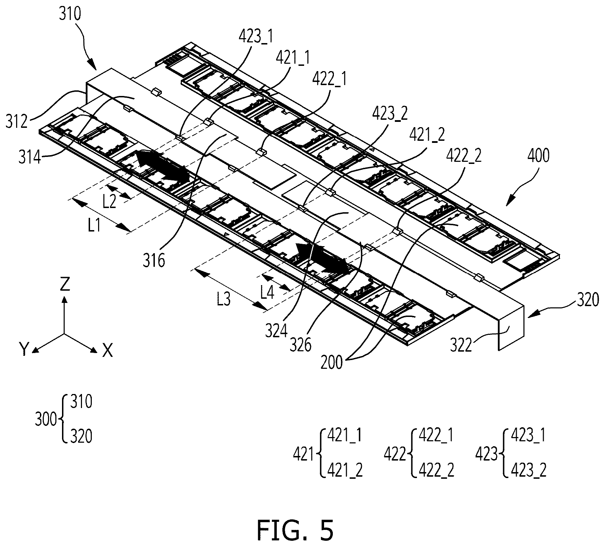

First fastening portion 421 may include a first_1 fastening portion 421_1 and a first_2 fastening portion 421_2. Second fastening portion 422 may include a second_1 fastening portion 422_1 and a second_2 fastening portion 422_2. Third fastening portion 423 may include a third_1 fastening portion 423_1 and a third_2 fastening portion 423_2. An example of how the support member is coupled to the plurality of fastening portions 420 will be described in more detail herein with reference to FIG. 5.

FIG. 5 is a perspective view illustrating an example in which a support member is on a bus bar holder according to embodiments of the present disclosure. In describing FIG. 5, a detailed description overlapping with FIGS. 3 and 4 is omitted.

In embodiments, bus bar holder 400 may include a plurality of fastening portions 420 protruding in the second direction (Z). The plurality of fastening portions 420 may include a first fastening portion 421, a second fastening portion 422 spaced from first fastening portion 421 in the first direction (X), and a third fastening portion 423 spaced from first fastening portion 421 in the third direction (Y).

Support member 300 may be between first fastening portion 421 and third fastening portion 423. For example, first extension portion 314 of first support member 310 may be between first_1 fastening portion 421_1 and third_1 fastening portion 423_1, and second extension portion 324 of second support member 320 may be between first_2 fastening portion 421_2 and third_2 fastening portion 423_2. In embodiments, first extension portion 314 and second extension portion 324 may be coupled to the plurality of fastening portions 420 by sliding in the first direction (X) on bus bar holder 400. The number and positions of first fastening portion 421, second fastening portion 422, and third fastening portion 423 are not limited to those illustrated in FIG. 4.

In embodiments, first extension portion 314 of first support member 310 may include a first fixing portion 316 protruding in the third direction (Y). A length (L2) of first fixing portion 316 in the first direction (X) may be shorter than a distance (L1) between first_1 fastening portion 421_1 and second_1 fastening portion 422_1. Accordingly, first extension portion 314 may be able to slide on bus bar holder 400. In addition, second extension portion 324 of second support member 320 may include a second fixing portion 326 protruding in the second direction (Y). A length (L4) of second fixing portion 326 in the first direction (X) may be shorter than a distance (L3) between first_2 fastening portion 421_2 and second_2 fastening portion 422_2. Accordingly, second extension portion 324 may be able to slide on bus bar holder 400.

Referring to FIGS. 4 and 5, bus bar holder 400 may include protrusion portion 410 protruding in the second direction (Z). In embodiments, one of first extension portion 314 of first support member 310 or second extension portion 324 of second support member 320 may be disposed on protrusion portion 410. For example, first extension portion 314 of first support member 310 may be disposed on protrusion portion 410, and second extension portion 324 of second support member 320 may not be disposed on protrusion portion 410.

The thickness of protrusion portion 410 may correspond to either the thickness of first extension portion 314 or the thickness of second extension portion 324. Accordingly, at least a portion of first extension portion 314 may overlap at least a portion of second extension portion 324 in the second direction (Z). For example, when first extension portion 314 is on protrusion portion 410, at least a portion of first extension portion 314 may be disposed over at least a portion of second extension portion 324, and when second extension portion 324 is on protrusion portion 410, at least a portion of second extension portion 324 may be disposed over at least a portion of first extension portion 314.

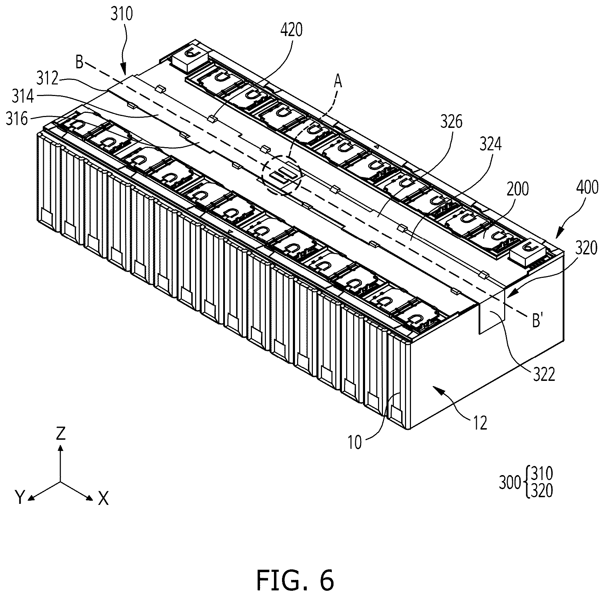

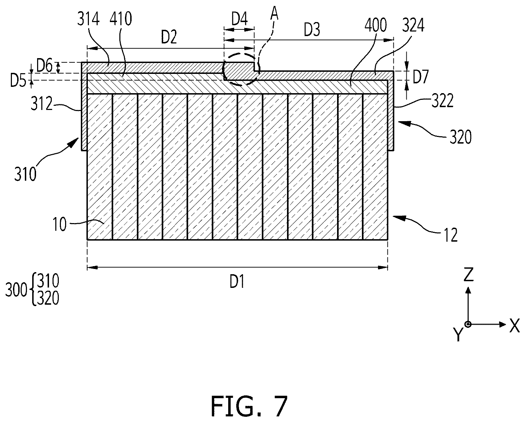

FIG. 6 is a perspective view illustrating an example in which a support member and a bus bar holder are on a stack according to embodiments of the present disclosure. FIG. 7 is a cross-sectional view taken along line B-B' of embodiments shown in FIG. 6.

In embodiments, a battery assembly may include stack 12 having a plurality of battery cells 10 stacked in the first direction (X), bus bar holder 400 on stack 12, and support member 300 on bus bar holder 400. Support member 300 may include first support member 310 that supports a first side surface of stack 12 and second support member 320 that supports a second side surface of stack 12.

Referring to FIGS. 6 and 7, at least a portion of first support member 310 may overlap at least a portion of second support member 320 in the second direction (Z). For example, at least a portion of first extension portion 314 of first support member 310 may overlap and be coupled with at least a portion of second extension portion 324 of second support member 320. In embodiments, at least a portion of first extension portion 314 may overlap at least a portion of second extension portion 324 and be coupled via a metal bond, for example, welded. A length (D4) in the first direction (X) of the overlapping region (A) of first extension portion 314 and second extension portion 324 may be determined based on a length (D1) of stack 12 in the first direction (X). For example, the length (D2) of first extension portion 314 in the first direction (X) plus the length (D3) of second extension portion 324 in the first direction (X), minus the length (D4) in the first direction (X) of overlapping region (A), may correspond to the length (D1) of stack 12 in the first direction (X). By adjusting the length (D4) of overlapping region (A), this correspondence may be achieved.

In embodiments, bus bar holder 400 may include protrusion portion 410 protruding in the second direction (Z). One of first extension portion 314 of first support member 310 or second extension portion 324 of second support member 320 may be disposed on protrusion portion 410. In FIGS. 6 and 7, first extension portion 314 of first support member 310 is illustrated as being on protrusion portion 410, but it is not limited thereto. For example, second extension portion 324 of second support member 320 may be disposed on protrusion portion 410. A thickness (D5) of protrusion portion 410 may correspond to either a thickness (D6) of first extension portion 314 or a thickness (D7) of second extension portion 324. Accordingly, at least a portion of first extension portion 314 may overlap at least a portion of second extension portion 324 in the second direction (Z). For example, when first extension portion 314 is on protrusion portion 410, at least a portion of first extension portion 314 may be disposed over at least a portion of second extension portion 324, and when second extension portion 324 is on protrusion portion 410, at least a portion of second extension portion 324 may be disposed over at least a portion of first extension portion 314.

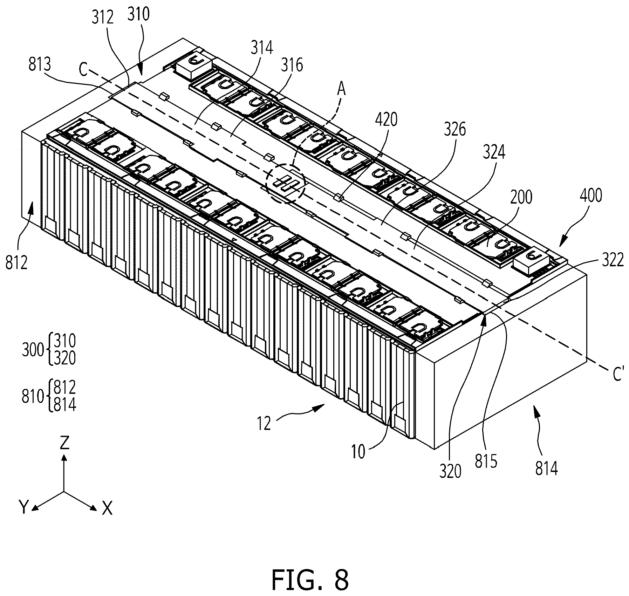

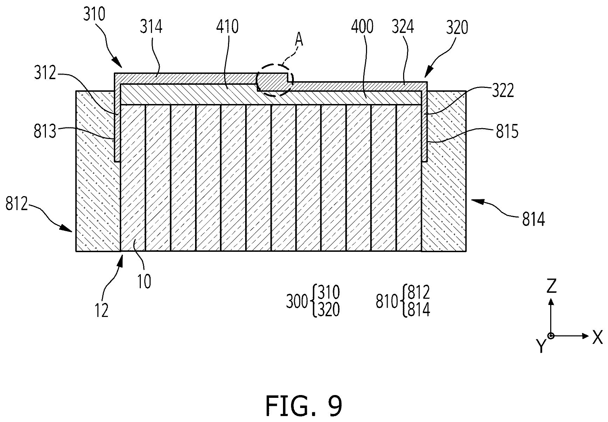

FIG. 8 is a perspective view illustrating an example of a battery assembly further including an end plate according to embodiments of the present disclosure. FIG. 9 is a cross-sectional view taken along line C-C' of embodiments shown in FIG. 8.

In describing FIGS. 8 and 9, details overlapping with the foregoing drawings are omitted.

In embodiments, a battery assembly may include stack 12 having a plurality of battery cells 10 stacked in the first direction (X), bus bar holder 400 on stack 12, and support member 300 on bus bar holder 400. Support member 300 includes first support member 310 that supports a first side surface of stack 12 and second support member 320 that supports a second side surface of stack 12, and at least a portion of first support member 310 may overlap at least a portion of second support member 320 in the second direction (Y).

Referring to FIGS. 8 and 9, the battery assembly may further include a first end plate 812 on the first side surface of stack 12 and a second end plate 814 on the second side surface of stack 12. First end plate 812 may include a first stepped portion 813 that accommodates first bent portion 312 of first support member 310, and second end plate 814 may include a second stepped portion 815 that accommodates second bent portion 322 of second support member 320. In embodiments, the thickness of first bent portion 312 may correspond to the thickness of first stepped portion 813, and the thickness of second bent portion 322 may correspond to the thickness of second stepped portion 815. First end plate 812 may contact the first side surface of stack 12 and first bent portion 312, and second end plate 814 may contact the second side surface of stack 12 and second bent portion 322.

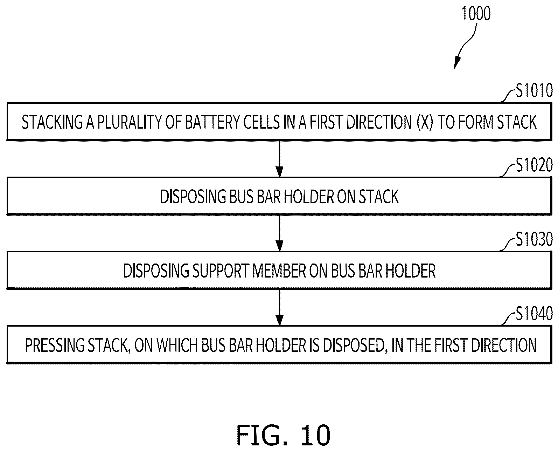

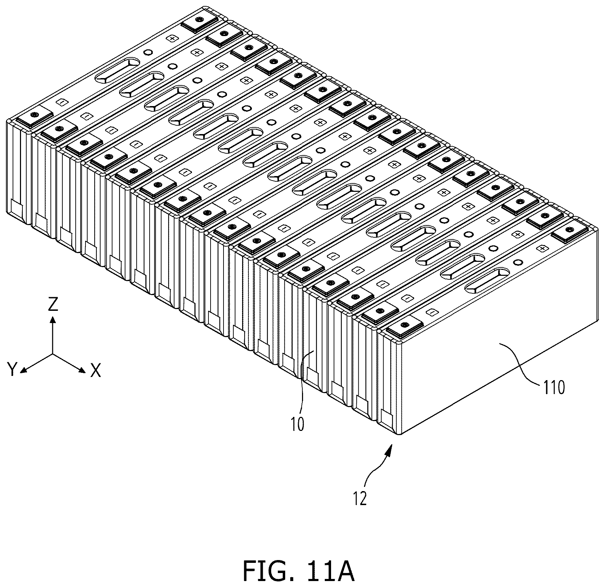

FIG. 10 is a flowchart illustrating a method for manufacturing a battery assembly according to embodiments of the present disclosure. FIGS. 11a to 11c are diagrams illustrating a process in which a battery assembly is manufactured according to embodiments of the present disclosure.

A battery assembly manufacturing method 1000 according to embodiments of the present disclosure may begin with step S1010 of stacking a plurality of battery cells 10 in a first direction (X) to form stack 12. For example, as shown in FIG. 11a, in stack 12, the plurality of battery cells 10 may be stacked in the first direction (X) so that their broad faces oppose each other.

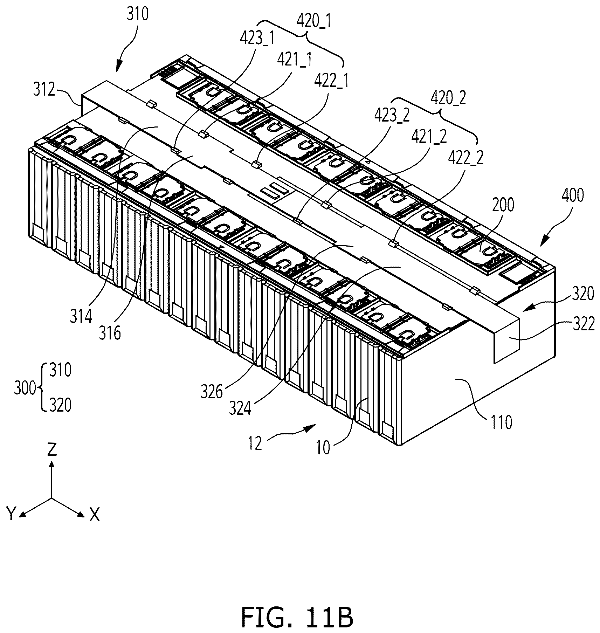

Next, as shown in FIG. 11b, bus bar holder 400 may be disposed on stack 12 (S1020), and support member 300 may be disposed on bus bar holder 400 (S1030). In embodiments, bus bar holder 400 may include a protrusion portion protruding in the second direction (Z), and either first extension portion 314 or second extension portion 324 may be disposed on the protrusion portion. The thickness of the protrusion portion may correspond to either the thickness of first extension portion 314 or the thickness of second extension portion 324. Accordingly, at least a portion of first extension portion 314 may overlap at least a portion of second extension portion 324 in the second direction (Z).

In embodiments, bus bar holder 400 may include a plurality of fastening portions 420 protruding in the second direction (Z). The plurality of fastening portions 420 may include a first fastening portion 421, a second fastening portion 422 spaced from first fastening portion 421 in the first direction (X), and a third fastening portion 423 spaced from first fastening portion 421 in the third direction (Y). Support member 300 may be between first fastening portion 421 and third fastening portion 423.

In embodiments, support member 300 may include first support member 310 that supports a first side surface of stack 12 and second support member 320 that supports a second side surface of stack 12, and at least a portion of first support member 310 may overlap at least a portion of second support member 320 in the second direction (Z). For example, first support member 310 may include a first extension portion 314 that extends along the first direction (X) and is on bus bar holder 400, and a first bent portion 312 that is bent from first extension portion 314 along the second direction (Z) and supports a first side surface of stack 12. In addition, second support member 320 may include a second extension portion 324 that extends along the first direction (X) and is on bus bar holder 400, and a second bent portion 322 that is bent from second extension portion 324 along the second direction (Z) and supports a second side surface of stack 12.

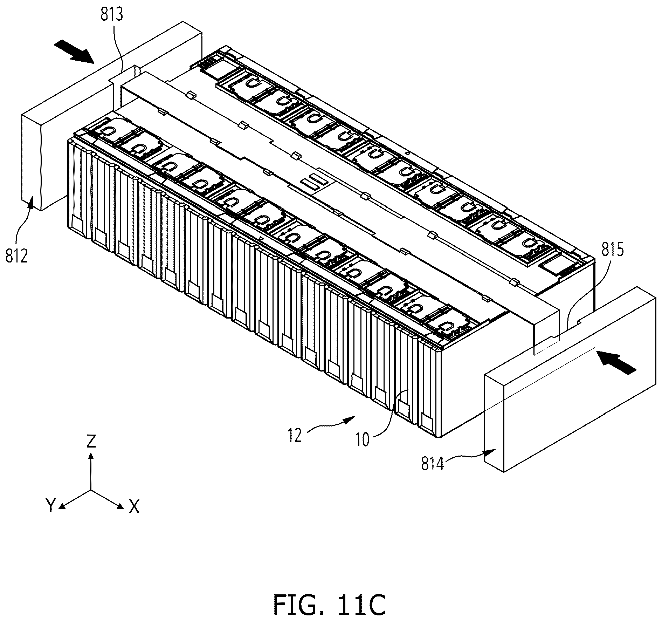

Next, as shown in FIG. 11c, step S1040 of pressing stack 12 (on which bus bar holder 400 is disposed) in the first direction (X) may be performed. The pressing step (S1040) may include pressing, in the first direction (X), the first side surface of stack 12 and first bent portion 312 of first support member 310 by using first end plate 812. First end plate 812 may include a first stepped portion 813 that accommodates first bent portion 312. The pressing step (S1040) may include pressing, in the first direction (X), the second side surface of stack 12 and second bent portion 322 of second support member 320 by using second end plate 814. Second end plate 814 may include a second stepped portion 815 that accommodates second bent portion 322.

The method 1000 may further include a step in which at least a portion of first extension portion 314 of first support member 310 overlaps and is coupled with at least a portion of second extension portion 324 of second support member 320. In embodiments, at least a portion of first extension portion 314 may overlap at least a portion of second extension portion 324 and be coupled via a metal bond, such as welding.

Although the present disclosure has been described herein with respect to embodiments thereof, the present disclosure is not limited thereto. Various modifications and variations can be made thereto by those skilled in the art within the equivalent scope of the appended claims.

## Claims

1. A battery assembly (1) comprising:
a stack (12) comprising a plurality of battery cells (10) stacked in a first direction;
a bus bar holder (400) on the stack (12); and
a support member (300) on the bus bar holder (400),
wherein the support member (300) comprises a first support member (310) that supports a first side surface of the stack (12) and a second support member (320) that supports a second side surface of the stack (12), and
wherein at least a portion of the first support member (310) overlaps at least a portion of the second support member (320) in a second direction that is different from the first direction.

2. The battery assembly (1) according to claim 1, wherein the first support member (310) comprises:
a first extension portion (314) that extends in the first direction, the first extension portion (314) being on the bus bar holder (400); and
a first bent portion (312) that is bent from the first extension portion (314) in the second direction, the first bent portion (312) supporting the first side surface of the stack (12),
and wherein the second support member (320) comprises:
a second extension portion (324) that extends in the first direction, the second extension portion (324) being on the bus bar holder (400); and
a second bent portion (322) that is bent from the second extension portion (324) in the second direction, the second bent portion (322) supporting the second side surface of the stack (12).

3. The battery assembly (1) according to claim 2, wherein at least a portion of the first extension portion (314) of the first support member (310) overlaps and is coupled with at least a portion of the second extension portion (324) of the second support member (320).

4. The battery assembly (1) according to claim 3, wherein an overlap length between the first extension portion (314) and the second extension portion (324) is determined based on a length of the stack (12) in the first direction.

5. The battery assembly (1) according to any one of claims 2 to 4, wherein the bus bar holder (400) comprises a protrusion portion (410) protruding in the second direction, and one of the first extension portion (314) or the second extension portion (324) is on the protrusion portion (410).

6. The battery assembly (1) according to claim 5, wherein a thickness of the protrusion portion (410) corresponds to either a thickness of the first extension portion (314) or a thickness of the second extension portion (324).

7. The battery assembly (1) according to any one of claims 2 to 6, wherein the bus bar holder (400) comprises a plurality of fastening portions (420) protruding in the second direction, the plurality of fastening portions (420) including:
a first fastening portion (421),
a second fastening portion (422) spaced from the first fastening portion (421) in the first direction, and
a third fastening portion (423) spaced from the first fastening portion (421) in a third direction that is different from the first and the second directions,
and wherein the support member (300) is between the first fastening portion (421) and the third fastening portion (423).

8. The battery assembly (1) according to claim 7, wherein the first extension portion (314) of the first support member (310) comprises a first fixing portion (316) protruding in the third direction, and a length of the first fixing portion (316) in the first direction is shorter than a distance between the first fastening portion (421) and the second fastening portion (422); and wherein the second extension portion (324) of the second support member (320) comprises a second fixing portion (326) protruding in the third direction, and a length of the second fixing portion (326) in the first direction is shorter than a distance between the first fastening portion (421) and the second fastening portion (422).

9. The battery assembly (1) according to claim 7 or claim 8, wherein the first extension portion (314) and the second extension portion (324) are coupled to the plurality of fastening portions (420) by sliding movement in the first direction on the bus bar holder (400).

10. The battery assembly (1) according to any one of claims 2 to 9, further comprising: a first end plate (812) on the first side surface of the stack (12), wherein the first end plate (812) comprises a first stepped portion (813) that accommodates the first bent portion (312); and a second end plate (814) on the second side surface of the stack (12), wherein the second end plate (814) comprises a second stepped portion (815) that accommodates the second bent portion (322).

11. A method for manufacturing a battery assembly (1), the method comprising:
stacking a plurality of battery cells (10) in a first direction to form a stack (12);
disposing a bus bar holder (400) on the stack (12);
disposing a support member (300) on the bus bar holder (400); and
pressing, in the first direction, the stack (12) on which the bus bar holder (400) is disposed,
wherein the support member (300) comprises a first support member (310) that supports a first side surface of the stack (12) and a second support member (320) that supports a second side surface of the stack (12), and
wherein at least a portion of the first support member (310) overlaps at least a portion of the second support member (320) in a second direction that is different from the first direction.

12. The method of manufacturing a battery assembly (1) according to claim 11, wherein the first support member (310) comprises:
a first extension portion (314) that extends in the first direction, the first extension portion (314) being on the bus bar holder (400); and
a first bent portion (312) that is bent from the first extension portion (314) in the second direction, the first bent portion (312) supporting the first side surface of the stack (12),
and the second support member (320) comprises:
a second extension portion (324) that extends in the first direction, the second extension portion (324) being on the bus bar holder (400); and
a second bent portion (322) that is bent from the second extension portion (324) in the second direction, the second bent portion (322) supporting the second side surface of the stack (12).

13. The method of manufacturing a battery assembly (1) according to claim 12, wherein the pressing comprises pressing, in the first direction, the first side surface of the stack (12) and the first bent portion (312) of the first support member (310) by using a first end plate (812), and wherein the first end plate (812) comprises a first stepped portion (813) that accommodates the first bent portion (312).

14. The method of manufacturing a battery assembly (1) according to claim 12 or claim 13, wherein the pressing comprises pressing, in the first direction, the second side surface of the stack (12) and the second bent portion (322) of the second support member (320) by using a second end plate (814), and wherein the second end plate (814) comprises a second stepped portion (815) that accommodates the second bent portion (322).

15. The method of manufacturing a battery assembly (1) according to any one of claims 12 to 14, further comprising overlapping and coupling at least a portion of the first extension portion (314) of the first support member (310) with at least a portion of the second extension portion (324) of the second support member (320).
